# EUROPÄISCHE PATENTSCHRIFT

(11) **EP 1 068 795 B1**
(45) Veröffentlichungstag und Bekanntmachung des Hinweises auf die Patenterteilung: **18.08.2004**
(21) Anmeldenummer: 00112103.7
(22) Anmeldetag: 06.06.2000
(51) Int. Cl.: A01G 17/14

(54) **Pfahl aus Stahlblech**
Pole from steel sheet
Poteau en tôle d'acier

(30) Priorität: 13.07.1999 DE 29911927 U; 22.07.1999 DE 29912475 U
(43) Veröffentlichungstag der Anmeldung: 17.01.2001
(73) Patentinhaber: Reisacher, Raimund, Dr.-Ing., 67117 Limburgerhof (DE)
(72) Erfinder: Reisacher, Raimund, Dr.-Ing., 67117 Limburgerhof (DE)
(74) Vertreter: Fischer, Wolf-Dieter, Dipl.-Ing.

(56) Entgegenhaltungen:
- WO-A-95/26452
- DE-A- 2 636 731
- DE-A- 3 501 746
- DE-A- 3 533 963
- DE-A- 3 608 549
- DE-A- 4 436 936
- DE-B- 1 212 768
- FR-A- 2 238 424
- FR-A- 2 278 247
- FR-A- 2 606 589
- US-A- 3 807 089

## Beschreibung

Die Erfindung betrifft einen Pfahl aus Stahlblech für Drahtrahmen im Wein- oder Obstbau, gemäβ Oberbegriff des Anspruchs 1. Ein derartiger Pfahl ist aus DE-A-26 36 731 bekannt.

Es ist ein weiterer Pfahl bekannt (DE 25 600 90 C2), der mit Doppelhaken versehen ist, wobei die Doppelhaken einander gegenüberliegende Zungen im Bereich der Drahteinlegeöffnung mit schräg verlaufenden Kanten aufweist. Die Zungen sind verhältnismäßig kurz ausgebildet, wobei ihre Länge gerechnet vom Grund des Freiraums in etwa dem doppelten Durchmesser des Spanndrahtes entspricht.

Für die Handhabung eines derartigen Pfahles ist es notwendig, den Spanndraht möglichst leicht einlegen und je nach Anwendung auch in dem Freiraum fixieren zu können. Durch schräg und ungünstig verlaufende Drahteinlegeöffnung ist dieses Einlegen erschwert. Dieses Problem ergibt sich auch hinsichtlich eines maschinellen oder manuellen Herausnehmens des Drahtes, da die entsprechende Maschine den Draht nach oben und/oder nach außen zieht. Der Spanndraht bleibt an den Zungen hängen. Bei manchen Hakenausbildungen, sei es, daß es sich um einen Doppelhaken oder um einen Einfachhaken handelt, wird durch die Ausstanzungen der Pfahl geschwächt, so daß er infolge der auftretenden Belastungen, wie beispielsweise bei Windböen, durch die eingeschlossene Vegetation, durch die eingesetzten Vollerntermaschinen oder beim maschinellen Ein- und Aushängen des Spanndrahtes beschädigt wird.

Der Erfindung liegt die Aufgabe zugrunde, einen derartigen Pfahl so auszubilden, daß ein leichtes manuelles und maschinelles Einlegen und Entnehmen des Drahtes gewährleistet ist, möglichst unter Beibehaltung der Kraftrichtung der Betätigungskraft innerhalb einer Tätigkeit, bei guter Verträglichkeit mit einer Vollerntermaschine, wobei gegebenenfalls auch ein Fixieren des Drahtes ermöglicht wird. Außerdem soll im Bereich der Hakenanordnung eine Materialersparnis erzielt werden.

Diese Aufgabe wird nach der Erfindung durch die Merkmale des Anspruchs 1 gelöst.

Es ist außerdem vorteilhaft, daß der Haken eine längliche, sich parallel zur Pfahlachse erstreckende, im Hakenansatz biegbare Zunge aufweist, die zur Drahteinlegeöffnung in eine verdickte Nase übergeht.

Weiterhin ist es vorteilhaft, daß die Nase eine abgerundete Außenkante aufweist.

Es wird vorgeschlagen, daß die verdickte Nase in Form eines Rückhakens ausgebildet ist.

Außerdem ist es vorteilhaft, daß die verdickte Nase eine Doppelkeilform besitzt.

Diese Ausführungsform des Hakens bringt den wesentlichen Vorteil, daß sich der Draht leicht in die Drahteinlegeöffnung einführen läßt, wobei die Öffnung ohne besondere Werkzeuge verschlossen werden kann. Ebenso leicht läßt sich die Öffnung zum Entnehmen des Drahtes wieder öffnen. Durch die geringe Deformation am Haken kann dieser mehrfach geöffnet und geschlossen werden.

Eine weitere vorteilhafte Ausführungsform besteht darin, daß zusätzlich stehende oder um maximal 60° geneigte Haken an seitlichen U- oder V-förmigen Ausformungen der Schenkel des Pfahles vorgesehen sind, wobei die geneigten Haken an der Ausformung eine unsymmetrische Anordnung von Gleitflächen zur Bildung einer Schikane aufweisen.

Es ist weiterhin vorteilhaft, daß die Maulöffnung der Schikane als weiterer Haken ausgebildet ist.

Gemäß einer weiteren Ausführungsform wird vorgeschlagen, daß die Maulöffnung als Einzelhaken ausgebildet ist, mit einer länglichen, parallel zur Pfahlachse verlaufenden kurzen Zunge, die im Hakenansatz nicht biegbar ist und die zur Drahteinlegeöffnung hin eine verdickte Nase aufweist, etwa in Form eines Doppelkeils oder eines Rückhakens.

Vorteilhaft geht man so vor, daß die U- oder V-förmige Ausformung der seitlichen Schenkel zum Pfahlrücken gelegt ist, wobei die Stanzaussparung in den Pfahlrücken hineingezogen ist.

Vorteilhaft ist eine Schikane in den Pfahlrücken einbezogen.

Es wird weiterhin vorgeschlagen, daß die Ausstanzung für die Hakenöffnung mit ihrem Boden in einem Abstand zu den seitlichen Schenkeln des Profils endet.

Es ist außerdem vorteilhaft, daß die Schenkel des Profils um einen Winkel zur Pfahlachse nach außen gebogen sind.

Die Erfindung wird in der nachfolgenden Beschreibung näher erläutert.

Es zeigen,
- Fig. 1: eine Teilansicht eines Pfahles mit einem Doppelhaken, bei der auf der linken Seite ein Draht unten und auf der rechten Seite ein Draht oben liegt,
- Fig. 2: einen Schnitt nach der Linie A-A in Fig. 1,
- Fig. 3: eine Teilansicht eines Pfahles mit einem Einfachhaken
- Fig. 4: einen Schnitt nach der Linie B-B in Fig. 3,
- Fig. 5: eine Teilansicht eines derartigen Pfahles mit einem Einfachhaken
- Fig. 6: einen Schnitt nach der Linie C-C in Fig. 5,
- Fig. 7: eine Teilansicht eines Pfahles im Bereich eines Einfachhakens in der linken Hälfte der Darstellung in geöffneter Form und in der rechten Darstellung in geschlossener Form,
- Fig. 8: einen Schnitt nach der Linie D-D in Fig. 7,
- Fig. 9: eine Ansicht eines derartigen Pfahles, in der linken Hälfte der Darstellung in geöffneter Form und in der rechten Darstellung in geschlossener Form,
- Fig. 10: einen Schnitt nach der Linie E-E in Fig. 9,

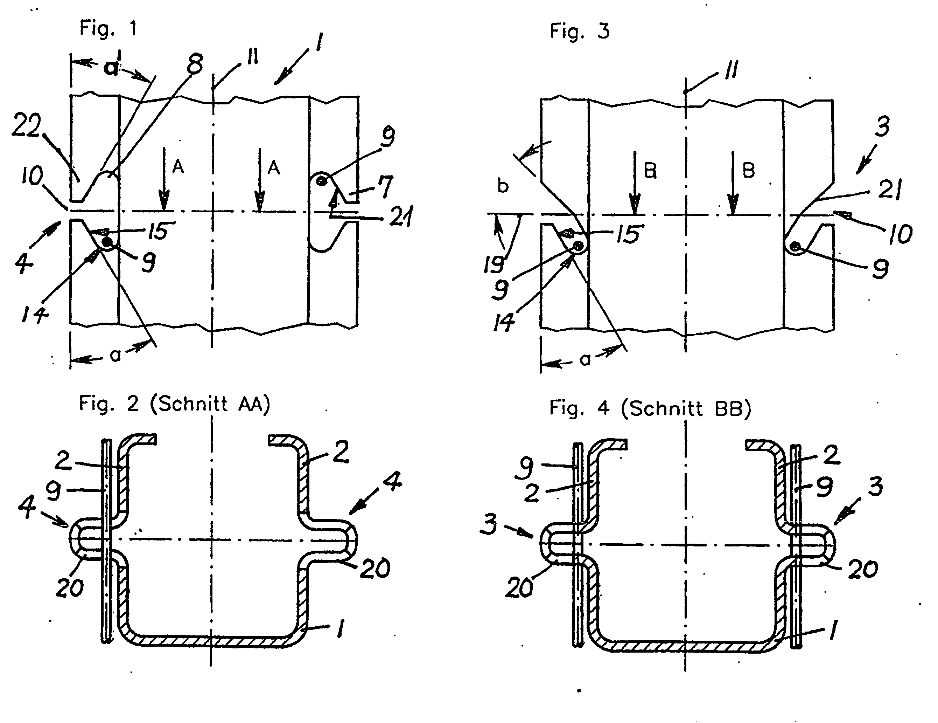

- Fig. 1: eine Teilansicht eines Pfahles mit einem Einfachhaken mit einer Schikane an der Einführung des Drahtes, links mit gerader und rechts mit gekrümmter Gleitfläche,

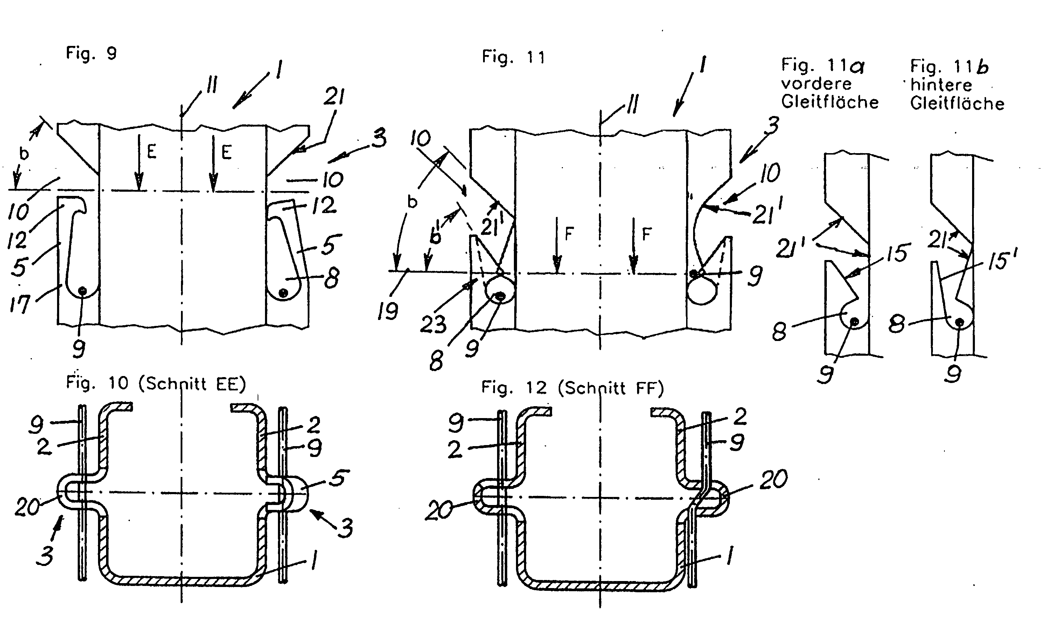

- Fig. 11 a, Fig. 11 b,: Teilansichten des Einfachhakens an der vorderen und der hinteren Gleitfläche,

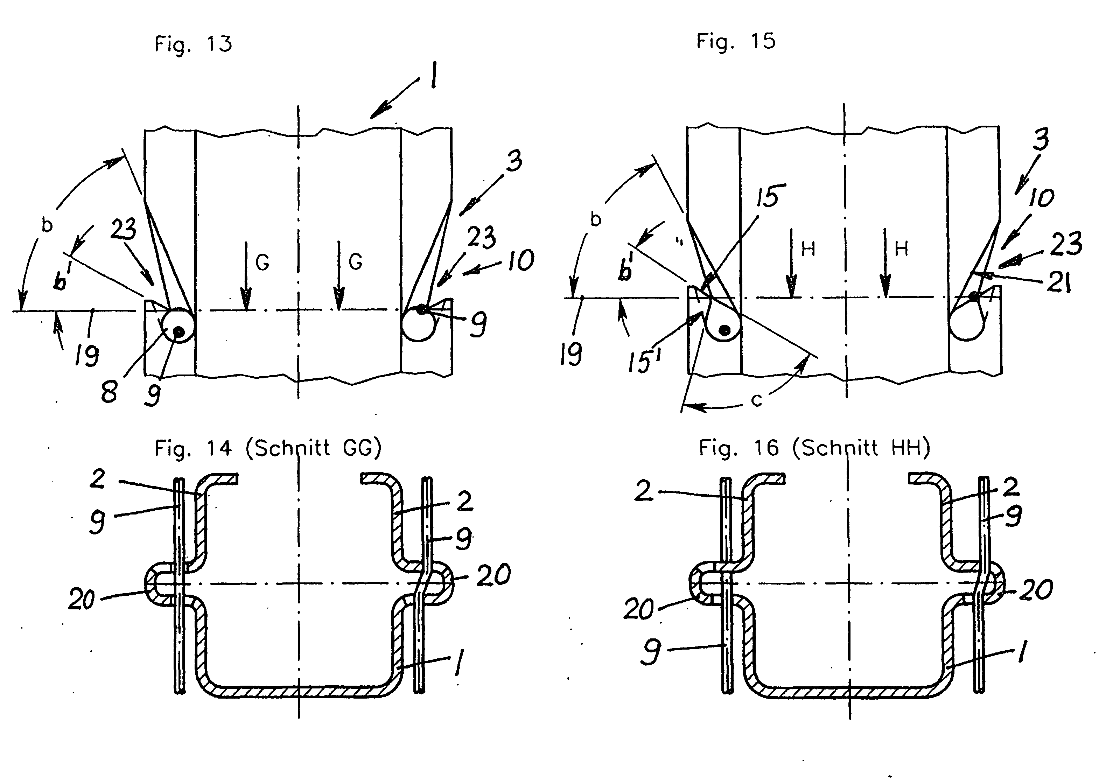

- Fig. 12: einen Schnitt nach der Linie F-F in Fig. 11,
- Fig. 13: eine Teilansicht des Pfahles mit einem Einfachhaken gemäß einer Weiterbildung des Pfahles nach den Figuren 11 und 12,
- Fig. 14: einen Schnitt nach der Linie G-G in Fig. 13,
- Fig. 15: eine Teilansicht des Pfahles mit einem Einfachhaken und einer offenen Schikane,

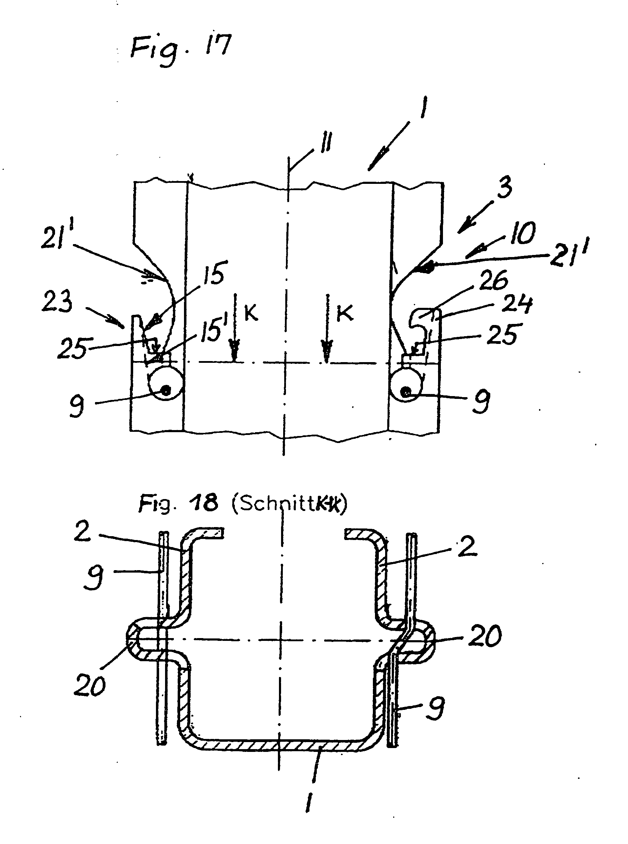

- Fig. 16: einen Schnitt nach der Linie H-H in Fig. 15,
- Fig. 17: eine Teilansicht des Pfahles mit einem kombinierten Einfachhaken und einer geschlossenen, abgesetzten Schikane, links mit Gleitfläche, rechts mit Gegenhaken,
- Fig. 18: einen Schnitt nach der Linie K-K in Fig. 17,

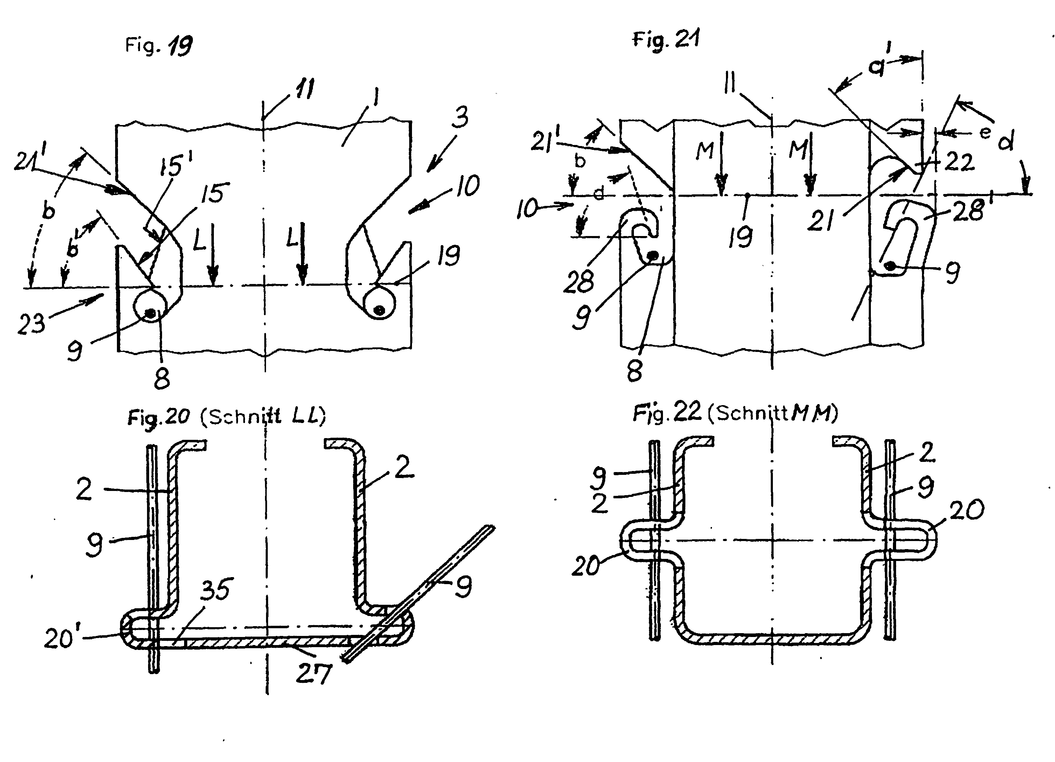

- Fig. 19: eine Teilansicht eines Pfahles mit einem Einfachhaken mit einer Schikane an der Einführung des Drahtes,
- Fig. 20: einen Schnitt nach der Linie L-L in Fig. 19,
- Fig. 21: eine Teilansicht des Pfahles mit einem kombinierten Einfachhaken, links mit der herkömmlichen Herstellungstechnik hergestellt, rechts durch Herausbiegen des Hakens als Nachbearbeitung,
- Fig. 22: einen Schnitt nach der Linie M-M in Fig. 21,

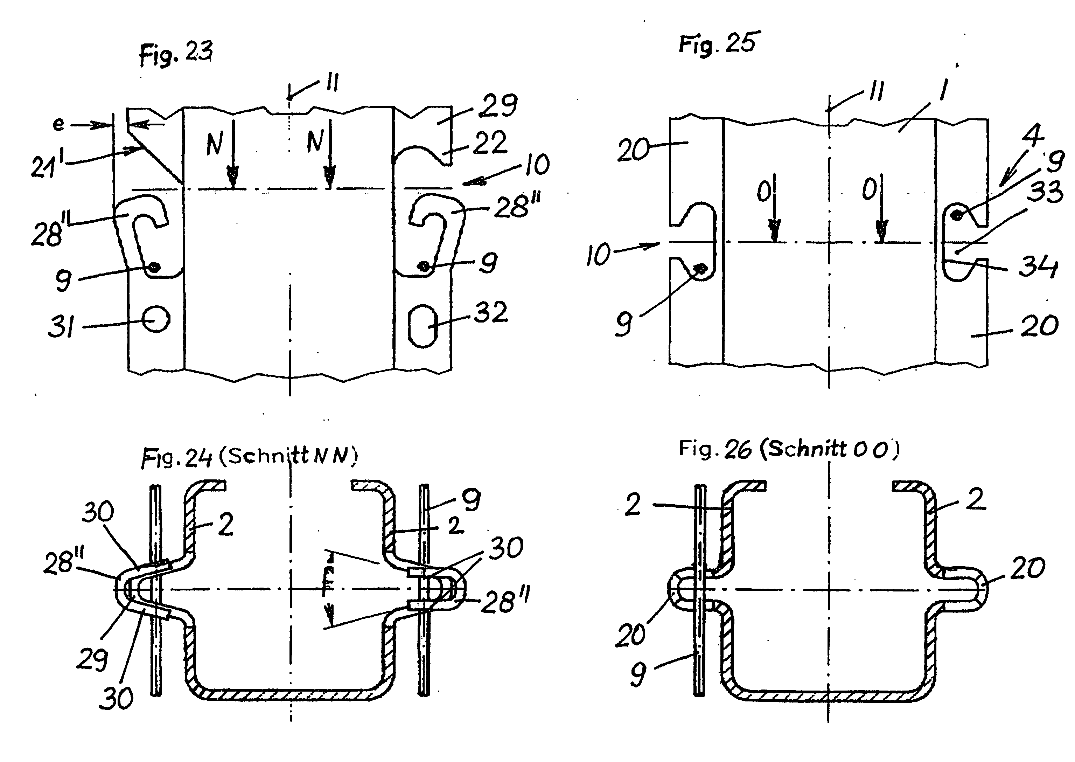

- Fig. 23: eine Teilansicht des Pfahles mit einem kombinierten Einfachhaken an einer V-förmigen Ausformung, links mit weit geöffnetem Maul, rechts mit einem teilweise geschlossenen Gegenhakenteil,
- Fig. 24: einen Schnitt nach der Linie N-N in Fig. 23,
- Fig. 25: eine Teilansicht des Pfahles an einem Doppelhaken, bei dem die Ausstanzung der Hakenöffnung nicht bis an die Seitenwandung reicht,
- Fig. 26: einen Schnitt nach der Linie O-O in Fig. 25,

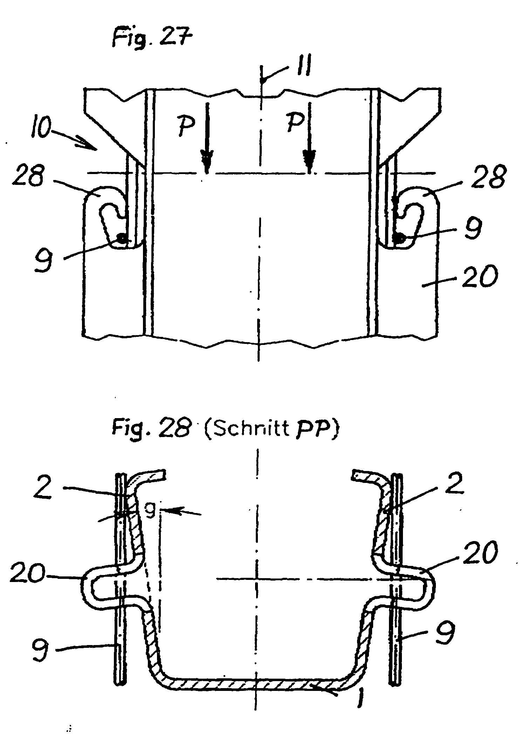

- Fig. 27: eine Teilansicht des Pfahles mit einem Gegenhaken und schräggestellten Profilschenkeln und
- Fig. 28: einen Schnitt nach der Linie P-P in Fig. 27.

Der in den Figuren 1 und 2 dargestellte Pfahl 1 besitzt ein in etwa U-förmiges Profil mit seitlichen Schenkeln 2, wobei Doppelhaken 4 in diesen Schenkeln 2 durch Ausstanzung und anschließende Profilierung, z.B. als V- oder U-förmige Ausformung 20 gebildet sind. Diese Hakenform befindet sich insbesondere im unteren Bereich eines solchen Pfahles 1 in der Funktion zum Aufbewahren des Heftdrahtes. Der Haken besitzt einen Freiraum 8 mit einem großen Innenvolumen, wobei bei dieser Hakenform und einer entsprechend großen Drahteinlegeöffnung 10 der Haken eine ausgesteifte Zunge 7 aufweist und nicht von Vollerntermaschinen zugeschlagen werden kann.

Ausgehend vom Grund 14 besitzt der Haken eine schräge Anlagekante 15, die nach außen hin, d.h. zur Außenkante des Pfahles 1 gerichtet ist. Der zwischen der schrägen Anlagekante 15 und der Außenseite des Pfahles 1 vorhandes Winkel a ist größer als der Haftreibungswinkel des Drahtes 9, wenn dieser nach außen gezogen wird.

Ausgehend von dem oberen Hakenteil 22 besitzt der Haken eine schräge Anlagekante 21, die nach außen hin, d.h. zur Außenkante des Pfahles 1 gerichtet ist. Der zwischen der schrägen Anlagekante 21 und der Außenseite des Pfahles 1 vorhandene Winkel a' ist größer als der Haftreibungswinkel des Drahtes 9, wenn dieser nach außen gezogen wird. Damit kann der Spanndraht 9 unabhängig von einer unteren oder oberen Lage besonders leicht manuell oder maschinell entnommen werden.

Die Winkel a und a' können ungleich gewählt werden, um eine Vorzugsrichtung für das Lösen des Drahtes 9 zu definieren.

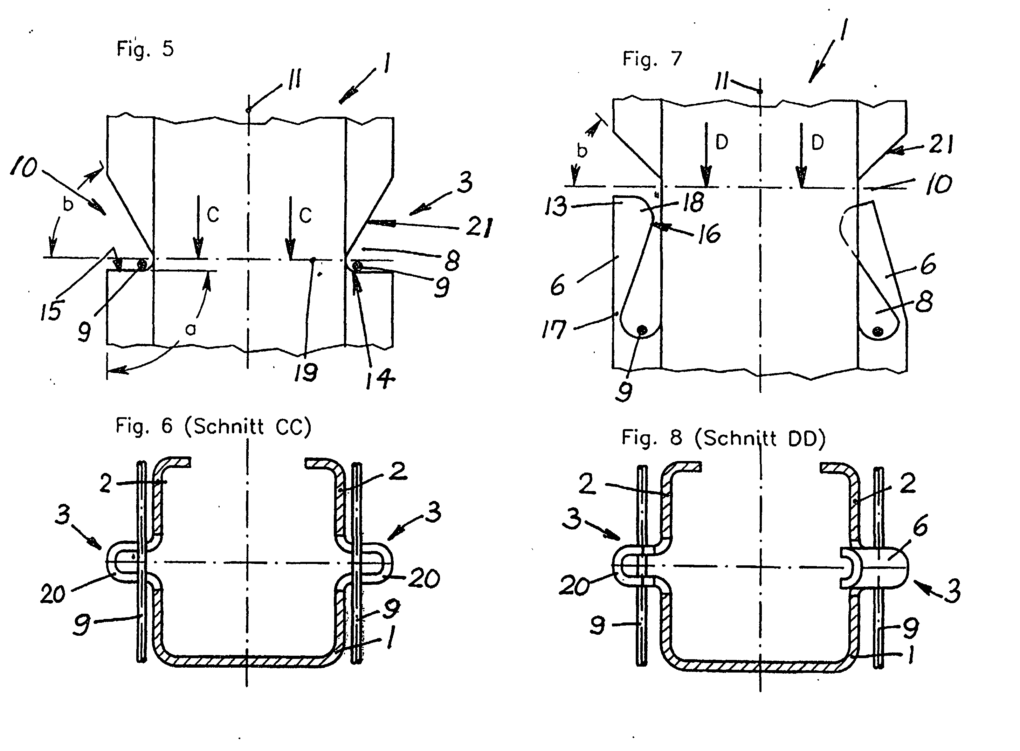

Der in den Figuren 3 und 4 gezeigte Pfahl stellt eine Abwandlung des Pfahls nach den Figuren 1 und 2 dar, nämlich die Hakenausbildung an einem Pfahl 1 mit einem innenliegenden Einfachhaken 3, wobei ähnlich den Figuren 5 bis 17 zur Drahteinlegeöffnung 10 eine obere Austrittskante 21 verläuft, die unter einem Winkel b zur Senkrechten 19 auf die Pfahlachse 11 geneigt ist. Der Winkel b soll größer als der Haftreibungswinkel, also etwa > 15° sein, wenn der Draht 9 mit einer Zugkraft nach oben sich selbständig lösen soll.

Zur Drahteinlegeöffnung 10 verläuft weiterhin eine untere Austrittskante 15, die unter einem Winkel a auf die Pfahlachse 11 geneigt ist. Der Winkel soll größer als der Haftreibungswinkel, als etwa > 15° sein, wenn der Draht 9 mit einer Zugkraft nach außen sich selbständig lösen soll.
Hierbei genügt es für die maschinelle Entnahme, wenn der Winkel b größer als der Haftreibungswinkel ist, da die Maschine den Draht 9 nach oben und/oder nach außen entnimmt. Der Winkel a kann dann gleich 0 sein. Bei dieser Ausgestaltung des Hakens ergibt sich ein großes freies Innenvolumen, so daß sich die Drähte 9 nicht im Profil verkanten oder verklemmen, wenn der Pfahl 1 verdreht oder schief steht. Der Haken ist so ausgesteift, daß er von einer Vollerntermaschine nicht zugeschlagen werden kann.

Bei dem in den Figuren 5 und 6 gezeigten Pfahl schließt die Anlagekante 15 mit der Pfahlachse 11 einen Winkel a von etwa 90° ein. Ein Drahtpaar besteht aus zwei parallelen Spanndrähten 9 und wird vor und hinter dem Pfahl 1 maschinell oder auch manuell zusammengeklammert, so daß die Spanndrähte 9 stets zueinander, das heißt in die Hakenkerbe zum Grund 14 hin hineingezogen werden. Wird das Drahtpaar oberhalb des Hakens geklammert, so rutscht dieses in den Haken hinunter und wird durch die Klammerspannung in den beidseitig angebrachten Kerben gehalten. Durch einen großen Winkel b erfolgt auch bei einer schnellen Rutschbewegung ein sicheres Einrasten. Die Grundfunktion wird auch bei der einseitigen Anbringung einer Hakenkerbe gewährleistet. Die Hakenkerbe kann auch maßstäblich kleiner ausgeführt werden und berührt dann im Hakengrund 14 nicht mehr die seitlichen Schenkel 2. Der Pfahl 1 gewinnt dadurch an Stabilität.

Für ein festes Einrasten wird der Winkel a zwischen 15° und 90° gewählt. Soll das Drahtpaar nach unten weitergestreift werden oder nach unten gelöst werden, muß ein Winkel a größer als 90° gewählt werden. Die Arretierkraft erfolgt über die Klammerung des Drahtpaares. Für die maschinelle Entnahme genügt ein Winkel b größer als der Haftreibungswinkel, wobei ein großer Winkel b und eine große Öffnung 10 das Einrasten des Drahtpaares erleichtern. Der Haken ist so ausgesteift, daß er von einer Vollerntermaschine nicht zugeschlagen werden kann.

Bei dem Pfahl nach den Figuren 7 und 8 befindet sich ein Einfachhaken 3 im Bereich der Schenkel 2 des Profils an in etwa V-oder U-förmigen Ausformungen 20. Es ist ein verdickter Haken 13 vorgesehen, der an einer langen Zunge 6 angeordnet ist und der gegen die Drahteinlegeöffnung 10 hin eine doppelkeilförmige Nase 18 besitzt und somit eine Clip-Funktion für den Spanndraht 9 aufweist. Zum Fixieren des Drahtes kann der Haken 13 in das Stanzloch des Profiles eingeschlagen werden, die Zunge 6 weist eine lange und große Schlagfläche auf. Ausgehend vom Hakenansatz 17 ist durch die große Schenkellänge der Zunge 6 nur eine geringe plastische Verformung beim Öffnen und Schließen des Hakens 3 gegeben. Zum leichten Einführen des Drahtes 9 ist die Nase 13 des Hakens gemäß einer Außenkante 16 abgerundet. Die obere Austrittskante 21 ist mit einem Winkel b größer dem Haftreibungswinkel schräg nach außen geneigt. Die starke Aussteifung des Hakenansatzes 17 gewährleistet einen gegen Zuschlagen geschützten Freiraum 8 für den Draht 9.

Durch das große offenbleibende Innenvolumen des Freiraumes 8 ergibt sich eine gute Zugänglichkeit für Werkzeuge, z.B. Schraubenzieher, so daß der Haken 3 auch einfach wieder geöffnet werden kann.

Für die maschinelle Entnahme des Drahtes nach oben ist der Winkel b größer als der Haftreibungswinkel ausgeführt.

Auch bei dem Pfahl nach den Figuren 9 und 10 befindet sich ein solcher Einfachhaken 3 im Bereich der Schenkel 2 des Profiles als in etwa V- oder U-förmige Ausformungen 20. Es ist ein verdickter Rückhaken 12 vorgesehen, der an einer langen Zunge 5, wie in Figur 7, angeordnet ist und der gegen die Drahteinlegeöffnung 10 hin eine hakenförmig ausgebildete Nase 12 für den Draht 9 aufweist. Zum Fixieren des Drahtes kann der Rückhaken 12 in das Stanzloch des Profiles 1 eingeschlagen werden. Bei Kräften auf den Draht nach außen und nach oben fängt sich der Draht 9 im Rückhaken 12, so daß hier eine verstärkte Haltefunktion besteht. Die obere Austrittskante 21 ist mit einem Austrittswinkel b größer dem Haftreibungswinkel geneigt, so daß ein Draht entlang der Innenkante mit einer Kraft nach oben ausgelöst werden kann.

Bei dem in den Figuren 11-12 dargestellten Pfahl mit einem Einfachhaken 3 sind die schrägen Anlagekanten bzw. Gleitflächen unsymmetrisch ausgebildet, das heißt ausgehend von der in etwa V- oder U-förmigen Ausformung 20 an den seitlichen Schenkeln 2 des Pfahles 1 ist die vordere Gleitfläche 15 etwas mehr geneigt, während die hintere Gleitfläche 15' steiler angeordnet ist. Die Hakenausbildung stellt somit eine Schikane 23 bei der Einführung des Spanndrahtes 9 dar, wobei eine große Maulöffnung 10 und große Winkel b, b' für die Anlagekanten 15, 15' bzw. 21, 21' ein Hineingleiten des Drahtes 9 ermöglichen. Die nach innen gerichtete abfallend verlaufende äußere Anlagekante 15 bewirkt, daß ein von außen aufgelegter Draht 9 sich dort zunächst sicher verfängt, bevor er dann maschinell oder manuell eingedrückt wird. Durch die starke Überdeckung der Schikane 23 und durch Unterschreiten des Haftreibungswinkels im Innenbereich erfolgt eine Fixierung des Drahtes 9. Der Draht kann auch zur Aufbewahrungsfunktion oder unterstützt durch Ausleger bzw. Heftdrahtfedern gänzlich in dem offenen Maul verweilen, was die Entnahme wesentlich vereinfacht.

Die gezeigte Ausführungsform der Schikane ist auch geeignet zum Fixieren von Auslegern, insbesondere wenn die Ausformung 20 nicht mittig am Pfahl 1, sondern nahe am Pfahlrücken angebracht ist. Der Draht kann dann hinter dem Pfahlrücken die beim Durchlaufen der Schikane verursachte horizontale Ausweichbewegung des Drahtes ohne Deformationen vollziehen.

Es ist vorteilhaft, zum Fixieren des Drahtes 9 die Mündung der Schikane 23 in die untere Hakenöse beim stehenden Haken (Fig. 11) mittels der langen Gleitflächen 15, 15' bzw. 21, 21' der Maulöffnung 10 von der Mitte der unteren Hakenöse nach innen zur Pfahlmitte hin zu verlegen. Die von den Drähten 9 eingeschlossene Vegetation bewirkt normalerweise einen steten Druck nach außen, so daß dann die Schikane 23 entlastet wird und keinen Kontakt zum eingeschlossenen Draht 9 bekommt. Dies mindert den Verschleiß der Schikane 23 und des Drahtes 9 und gleichfalls das Risiko, daß der Draht auf Grund irgendwelcher Zufälle doch aus der Schikane 23 springen sollte.

Bei den Pfahlen nach den Figuren 13 und 14, die eine ähnliche Anordnung wie die vorbeschriebenen Pfahle zeigen, ist die Öffnung 10 des Hakens 3 etwas seitlich gedreht und es wurde zusätzlich die Überdeckung der Schikane 23 reduziert. Durch die Drehung erfolgt ein geradlinigeres Ein- und Auslegen und die Bewegungsrichtung muß nicht über zwei Gleitflächen umgelenkt werden, sondern eine Gleitfläche 15 ist ausreichend.

Durch die Reduzierung der Überdeckung der Schikane 23 und durch das Überschreiten des Haftreibungswinkels im Innenbereich bezüglich einer Ausziehkraft nach schräg außen oben, kann der Draht 9 mit mittlerem Kraftaufwand auch wieder entnommen werden.

Bei dem Pfahl nach den Figuren 15 und 16 ist die Schikane 23 offen gestaltet und weist starke innere Gleitflächen 15, 15' für das maschinelle Einlegen und Entnehmen auf. Die Betätigungsrichtung kann nach oben und schräg nach außen sein.

Die Figuren 13 und 15 zeigen gegenüber der Figur 11 eine nach außen gedrehte Hakenanordnung, wobei eine Drehung um ungefähr 30° erfolgt. Durch die leicht geneigte Anordnung behält man weiter eine große Einlegeöffnung 10 mit langen, sanften Gleitflächen 15 und 21, die ein weiches Überwinden der Schikane 23 zum Einlegen und Entnehmen des Drahtes 9, ohne Änderung der Kraft-Wirkrichtung ermöglichen. Erfolgt eine Drehung der Hakenanordnung nach Figur 11 über 60° hinaus, so werden die Gleitflächen 15 aufgrund der begrenzten Tiefe der Haken-Ausprofilierung zu kurz, um weiche Übergänge zu ermöglichen.

Weiterhin erfolgt die Ausweichbewegung des Drahtes 9 beim Durchlaufen der Schikane 23 bei annähernd stehender Hakenanordnung in Querrichtung (horizontal), so daß eine geländeabhängige vertikale Steigung des Drahtes, z. B. in Hanglagen oder Bodensenken, keinen großen Einfluß hat.

Bei liegender Hakenanordnung (Drehung der Hakenanordnung nach Figur 11 um 90°) erfolgt die Ausweichbewegung des Drahtes 9 jedoch in Hochrichtung, so daß eine durch die Hanglage vorgegebene Drahtsteigung extremen Einfluß hat.

Die Schikanen 23 beinhalten allgemein das Problem, daß die Wirkungsweise, insbesondere bei der gewünscht geringen Rücksperrwirkung nach Figur 15, sehr stark vom Drahtdurchmesser abhängt. Es werden teilweise Edelstahldrähte mit Durchmesser 1 mm, aber auch normale Drähte oder kunststoffummantelte Drähte mit bis zu Durchmesser 3 mm verwendet. Entsprechend lösen sich dünne Drähte leichtgängig, dicke Drähte schwergängig. Weiterhin besteht das Problem, daß die Haken der Figuren 11 bis 18 infolge der hohen Aussteifung in Außenrichtung zu einem Fixieren der Drähte praktisch nicht zugeschlagen werden können.

Um dem Anwender eine individuelle Einstellmöglichkeit der Schikanenfunktion zu gewährleisten, können im Bereich der Schikane 23 die langen Gleitflächen 15 und 21 mit einer Zange zueinander gebogen werden, was bei mittiger Berührung der zwei Gleitflächen 15, 21 die Schikane 23 vollständig schließt. Es kann hierzu ein motorbetriebenes Spezialwerkzeug angeboten werden, bei dem die Zustellung einstellbar ist.

Bei den verschiedenen Erziehungsformen der Weinreben ergibt sich das Problem, daß bei einer Anwendung eine Hakenposition zum Fixieren des Drahtes 9 benötigt wird, bei einer anderen Anwendung dieselbe Hakenposition zum leichten Ein- und Auslegen des Drahtes 9. Man müßte folglich für jeden Winzer einen eigenen Pfahl 1 mit eigener Hakenanordnung produzieren.

Der in den Figuren 17 und 18 dargestellte Pfahl zeigt einen kombinierten Haken, bei dem die Maulöffnung 10 als separater Haken 24 ausgeführt ist und mit einem Unterteil über eine Schikane 23, entsprechend den Figuren 11-16, getrennt wird. Es ist vorteilhaft die Schikane 23 mit einem Absatz 25 zu versehen, damit der Draht 9 eine definierte, ebene Auflagefläche bekommt und sich nicht durch eine keilförmige Geometrie verklemmt.

Die Figur 17 zeigt auf der linken Seite einen oberen Haken nach Figur 3, der für eine maschinelle Beschickung und Entnahme ausgelegt ist.

Auf der rechten Seite ist in Figur 17 ein oberer Haken dargestellt, der über eine kurze, vollernterfeste Zunge 26 mit einer Nase versehen ist, die einen Gegenhaken aufweist, ähnlich den Pfahlen nach den Figuren 7 und 9. Der Draht 9 kann von Hand ausgeschleudert werden.

Der untere Teil des Hakens 3 ist jeweils für eine Fixierung des Drahtes 9 mittels der Schikane 23.

Mit dem Kombinationshaken kann der obere Haken 24 auf eine optimale Beschickung und Entnahme ausgelegt werden, während der untere Haken zur Fixierung des Drahtes 9 dient. Die beiden Auflagepunkte des Drahtes der beiden Haken haben nur einen geringen Höhenversatz. Der Pfahl 1 wird durch die kurze Bauform des Kombinationshakens nur geringfügig geschwächt.

Dieselbe Funktion kann auch mit zwei direkt übereinander angeordneten, nur 1 bis 2 cm getrennt liegenden, separaten Haken 3 erreicht werden, z. B. ein Haken nach Figur 11 oberhalb eines Hakens nach Figur 3. Der Haken nach Figur 11 ist für ein Fixieren des Drahtes 9, der Haken nach Figur 3 für ein leichtes Beschicken und Entnehmen ausgelegt.

Der in den Figuren 19 und 20 dargestellte Pfahl 1 besitzt ein in etwa U-förmiges Profil mit seitlichen Schenkeln 2. An den Pfahlrücken 27 schließen sich zu beiden Seiten U-förmige Ausformungen 20' an, die auch V-förmig ausgebildet sein können. In diesen Ausformungen 20' sind Einfachhaken 3 oder auch Doppelhaken ausgebildet, in denen der Spanndraht 9 eingehängt wird. Bei diesem Pfahl ist eine Drahteinlegeöffnung 10 vorgesehen, an der der Haken 3 als Schikane 23 ausgebildet ist, in dem eine vordere Gleitfläche 15 zum Freiraum 8, wo der Spanndraht 9 eingelegt ist, nach unten schräg unter einem Winkel b' verläuft und dann die hintere Gleitfläche 15' dazu verdreht verläuft. Gegenüberliegend zum Freiraum 8 befindet sich eine obere Gleitfläche 21' als schräge Anlagekante, die unter einem Winkel b zur Senkrechten 19 zur Pfahlachse 11 verläuft. Dadurch, daß die Schikane 23 in den Pfahlrücken 27 mit einbezogen ist, ist ein höherer Verschränkungswinkel für den Spanndraht 9 möglich, so wie dies im rechten Teil der Fig. 20 gezeigt ist.

Bei dem Pfahl nach den Figuren 21 und 22 ist auf der linken Seite ein Pfahl mit einem Gegenhaken 28 dargestellt, wobei die Maulöffnung 10 als Gleitfläche 21' mit dem Winkel b größer dem Haftreibungswinkel für den Spanndraht 9 ausgelegt ist und der Gegenhaken einen Rückwinkel d bildet, der größer 45° bis größer 90° sein kann. Die Herstellung erfolgt mit der herkömmlichen Herstellungstechnik, d.h. durch entsprechendes Ausstanzen und Ausprofilieren. Der hierbei entstehende Haken ist vollernterfest.

Der Draht 9 wird über die große Maulöffnung 10 sehr einfach in den Haken eingelegt. Die von den Drähten 9 eingeschlossene Vegetation schiebt den Draht nach oben und drückt ihn nach außen, wo er sich in dem Gegenhaken 28 verfängt. Bei Windböen versucht der Draht zu pendeln und wird über den Gegenhaken mit dem Rückwinkel d gehalten. Sofern der Winkel d kleiner als 85° ist besteht die Gefahr, daß der Draht z.B. bei einer Windböe von außen die Haftreibung überwindet und nach innen aus dem Gegenhaken 28 gedrückt wird und sich anschließend insgesamt aus dem Haken löst.

Bei der Ausbildung auf der rechten Seite gemäß den Figuren 21 und 22 wird ein Gegenhaken 28' durch Herausbiegen als Nachbearbeitung erzeugt. Die Herausbiegung erfolgt um einen Betrag e gegenüber der Pfahlachse 11. Die Maulöffnung 10 ist hierbei zusätzlich als Gegenhaken gemäß dem oberen Hakenteil 22 ausgebildet, wobei der Winkel a' zwischen der Außenkante, die parallel zur Pfahlachse 11 verläuft und der Gleitfläche 21 kleiner 45° bis gleich 0° ist. Durch die Ausgestaltung mit großen gerundeten Formen ist dieser Pfahl für ein Ausschleudern des Drahtes 9 gut geeignet. Bei starken Bodensenken dient der obere Gegenhaken 22 der vereinfachten Einhängung des Drahtes, da der Dreht 9 von sich aus einen sehr starken Zug nach oben hat. Zum Entnehmen kann der Draht 9 durch eine Drehbewegung ausgeschleudert werden.

Durch diese Ausbildung des Hakens ergibt sich eine große Materialersparnis, da das Ausprofilieren des Hakens wesentlich kleiner ausgeführt sein kann. Weiterhin kann der Haken 28' durch Gegenbiegen nach innen geschlossen werden.

Bei dem in den Figuren 23 und 24 gezeigten Pfahl sind die an den seitlichen Schenkeln 2 des Pfahlprofiles vorgesehenen Ausformungen 29 V-förmig ausgebildet, wobei die Schenkel 30 des V einen Winkel f einschließen. Die Hakenform des Gegenhakens 28'' ist entsprechend der Hakenform in Fig. 21, rechte Seite, ausgebildet. Unterhalb dieser Haken befindet sich bei dem Pfahl an der linken Seite ein Zusatzloch 31 als Rundloch und bei dem Pfahl auf der rechten Seite ein Zusatzloch 32 als Langloch.

Durch die V-förmige Ausgestaltung der Ausformung 29 verlängert sich die Schenkellänge der Hakenausformung. Wird der Gegenhaken 28'' nach der Profilierung zugebogen, dann steht somit eine vergrößerte Schenkellänge zur Verfügung, womit weiteres Material eingespart wird.

Weiterhin besteht die Möglichkeit, bei dem Pfahl gemäβ der rechten Darstellung den Winkel f auf Null zu verringern oder auch in einen Bereich f kleiner 0° vorzusehen, wodurch sich der Abstand zwischen den beiden Auflageflächen der Hakenöse verringert, so daß ein im Gelände ansteigender Draht von beiden Hakenösenteilen noch eine Führung erhält.

Werden beide Hakenschenkel 30 mit den Spitzen vollständig zueinander gebogen (f < 0°), so schließt sich der enge Spalt zwischen den beiden Blechen durch ein nachträglichen Feuerverzinken und es entsteht quasi ein neuer einteiliger Haken. Durch die Verzinkung versteift sich der Haken gegen eine weitere Biegung nach innen bzw. außen.

Das Rundloch 31 bzw. das Langloch 32 haben die Funktion, bei einer offenen, vollernterfesten Hakenform den Draht zu fixieren. Soll ein Festdraht installiert werden, dann kann dieser direkt durch das Zusatzloch 31 bzw. 32 geführt werden und ist somit fixiert. Ein loser Draht 9 im Hakenmaul 10 kann auch dadurch fixiert werden, daß er mit einem zusätzlichen Drahtstückchen zu dem Zusatzloch 31, 32 hingebunden wird.

Bei dem in den Figuren 25 und 26 gezeigten Pfahl ist ein Doppelhaken 4 dargestellt, bei dem die Ausstanzung der Hakenöffnung 33 nicht bis an die Seitenwandung, d.h. die Schenkel 2 des Profils, reicht. Dadurch wird das Pfahlprofil an der Stanzstelle erheblich stabilisiert. Dieser Pfahl ist insbesondere bei den untersten Haken vorteilhaft, wo die höchste Belastung durch ein anliegendes Biegemoment herrscht.

Bei dem Pfahl nach den Figuren 27 und 28 ist ein ähnlicher Gegenhaken wie in Fig. 21, linke Darstellung, gezeigt, während die beiden Schenkel 2 um einen Winkel g nach außen gebogen sind. Die Schrägstellung der Profilschenkel 2 um den Winkel g bewirkt, daß der Draht 9 durch die Eigenspannung immer nach außen in den Haken 28 gedrückt wird. In der Kombination mit dem Gegenhaken 28 unterstützt dies das Verhaken des Drahtes. In der Kombination mit einem Doppelkeil, z.B. gemäß Fig. 21 rechte Darstellung, unterstützt dies den Clip-Effekt. Schließlich ergibt sich bei einer Kombination mit einer Schikane, z.B. gemäß Fig. 19, eine unterstützende Haltefunktion der Schikane.

### Bezugszeichenliste

- 1: Pfahl
- 2: seitliche Schenkel
- 3: Einfachhaken
- 4: Doppelhaken
- 5: Zunge
- 6: lange Zunge
- 7: ausgesteifte Zunge
- 8: Freiraum
- 9: Draht - Spanndraht
- 10: Drahteinlegeöffnung
- 11: Pfahlachse
- 12: hakenförmige Nase
- 13: verdickter Haken - Rückhaken - Nase
- 14: Grund
- 15, 15': schräge Anlagekante - Gleitfläche
- 16: Außenkante
- 17: Hakenansatz
- 18: doppelkeilförmige Nase
- 19: Senkrechte zur Pfahlachse
- 20: Ausformung U-förmig
- 20, 21': schräge Anlagekante und Austrittskante (Gleitfläche)
- 22: oberes Hakenteil
- 23: Schikane
- 24: weiterer Haken
- 25: Absatz
- 26: Zunge
- 27: Pfahlrücken d = Rückwinkel
- 28, 28', 28'': Gegenhaken (ähnlich 24)
- e: Herausbiegung zur Pfahlachse - Abstand
- 29: V-förmige Ausformung
- 30: Schenkel von 28''
- f: Winkel der Schenkel 30 von 28''
- 31: Zusatzloch als Rundloch
- 32: Zusatzloch als Langloch
- 33: Hakenöffnung
- 34: Boden der Hakenöffnung
- 35: Stanzaussparung
- 36: Maulöffnung des Gegenhakens
- g: Winkel der Schenkel 2 zur Pfahlachse nach außen

## Patentansprüche

1. Pfahl (1) aus Stahlblech für Drahtrahmen im Wein- oder Obstbau, mit einem Grundprofil, insbesondere in Form eines U, V, S, Z, Vierkants, Rundrohres, Rautenform, offener Rautenform, Ovals, oder offenen Ovals, und mindestens zwei an den Schenkeln (2) des Grundprofils angeordneten innenliegenden Doppelhaken (4), die durch Ausstanzen von Zungen (5, 6, 7) aus dem Stahl blech gebildet sind, wobei jeder Doppelhaken eine Drahteinlegeöffnung (10) und einen Freiraum (8) für einen Spanndraht (9) sowie eine zur Außenseite des Pfahls (1) hin gerichtete schräge untere und obere Anlage kante (15,21) sowie eine breite Einlegeöffnung (10) aufweist,
**dadurch gekennzeichnet, daß**
die untere und obere Anlagekante (15, 21) als große, in den Haken (4) integrierte Gleitflächen (15, 21)ausgestaltet sind, wobei die untere Anlagekante (15) ausgehend von einem Grund (14) des Freiraums (8) im wesentlichen geradlinig zur Drahteinlegeöffnung (10) verläuft und der Winkel (a') zwischen der oberen Gleitfläche (21) und
der Pfahlachse (11)sowie der Winkel (a) zwischen der unteren Gleitfläche (15) und der Pfahlachse (11) größer ist als der zwischen Draht (9) und Haken (4) auftretende Haftreibungs winkel von etwa 15° bei einer Zugkraftrichtung nach außen.

2. Pfahl nach Anspruch 1, **dadurch gekennzeichnet, daß** der Haken (4) eine längliche, sich parallel zur Pfahlachse (11) erstreckende, im Hakenansatz (17) biegbare Zunge (5, 6) aufweist, die zur Drahteinlegeöffnung (10) in eine verdickte Nase (12, 13) übergeht.

3. Pfahl nach Anspruch 2, **dadurch gekennzeichnet, daß** die Nase (12) eine abgerundete Aussenkante (16) aufweist.

4. Pfahl nach einem der Ansprüche 2 oder 3, **dadurch gekennzeichnet, daß** die verdickte Nase (13) in Form eines Rückhakens ausgebildet ist.

5. Pfahl nach einem der Ansprüche 2 bis 4, **dadurch gekennzeichnet, daß** die verdickte Nase (13) eine Doppelkeilform (18) besitzt.

6. Pfahl nach einem der Ansprüche 1 bis 5, **dadurch gekennzeichnet, daß** zusätzlich stehende oder um maximal 60° geneigte Haken (3) an scitlichen U- oder V-förmigen Ausformungen (20) der Schenkel (2) des Pfahles (1) vorgesehen sind.

7. Pfahl nach Anspruch 6, **dadurch gekennzeichnet, daß** die geneigten Haken (3)
an der Ausformung (20) eine unsymmetrische Anordnung von Gleitflächen (15,15', 21, 21') zur Bildung einer Schikane aufweisen.

8. Pfahl nach Anspruch 7, **dadurch gekennzeichnet, daß** die Maulöffnung (10) der Schikane (23) als weiterer Haken (24) ausgebildet ist.

9. Pfahl nach Anspruch 8, **dadurch gekennzeichnet, daß** die Maulöffnung (10) als Einzelhaken (24) ausgebildet ist, mit einer länglichen, parallel zur Pfahlachse (11) verlaufenden kurzen Zunge, die im Hakenansatz (17) nicht biegbar ist und die zur Drahteinlegeöffnung (10) hin eine verdickte Nase aufweist, etwa in Form eines Doppelkeils (18) oder eines Rückhakens (13).

10. Pfahl nach einem der Ansprüche 7 bis 9, **dadurch gekennzeichnet, daß** zum Fixieren des Drahtes (9) die Mündung der Schikane (23) in die untere Hakenöse bei stehenden Haken mittels der langen Gleitflächen (15, 15', 21, 21') der Maulöffnung (10) von der Mitte der unteren Hakenöse nach innen zur Pfahlmitte hin verlegt ist.

11. Pfahl nach einem der Ansprüche 1 bis 10, **dadurch gekennzeichnet, daß** zwei Haken unterschiedlicher Gestaltung und Funktion in geringem Abstand und übereinander als doppelter Haken vorgesehen sind.

12. Pfahl nach einem der Ansprüche 6 bis 11, **dadurch gekennzeichnet, daß** die U- oder V-förmige Ausformung (20,20') der seitlichen Schenkel (2) zum Pfahlrücken (27) gelegt ist, wobei die Stanzaussparung (35) in den Pfahlrücken (27) hineingezogen ist.

13. Pfahl nach Anspruch 12, **dadurch gekennzeichnet, daß** eine Schikane (23) in den Pfahlrücken (27) einbezogen ist.

14. Pfahl nach einem der Ansprüche 1 bis 13, **dadurch gekennzeichnet, daß** die Ausstanzung für die Hakenöffnung (33) mit ihrem Boden (34) in einem Abstand zu den seitlichen Schenkeln (2) des Profils endet.

15. Pfahl nach einem der Ansprüche 1 bis 14, **dadurch gekennzeichnet, daß** die Schenkel (2) des Profils um einen Winkel (g) zur Pfahlachse (11) nach außen gebogen sind.

16. Pfahl nach einem der Ansprüche 1 bis 15, **dadurch gekennzeichnet, daß** die Doppelhaken (4) sich im unteren Bereich des Pfahls (1) befinden.

## Claims

1. Pole (1) made of sheet steel for a wire frame in vine or fruit growing, comprising a basic profile, in particular in the form of a U, a V, an S, a Z, a square, a round tube, a rhomboid, an open rhomboid, an oval or an open oval, and at least two interior double hooks (4), formed by punching tongues (5, 6, 7) out of the sheet steel and arranged on the legs (2) of the basic profile, each double hook comprising a wire insertion opening (10), a free space (8) for a tension wire (9), an oblique lower and upper lay edge (15, 21) directed toward the outer side of the pole (1), and a broad insertion opening (10), **characterised in that** the lower and upper lay edges (15, 21) are configured as large sliding surfaces (15, 21) that are incorporated into the hook (4), the lower lay edge (15), emerging from a base (14) of the free space (8), extending in a substantially straight line toward the wire insertion opening (10), and the angle (a') between the upper sliding surface (21) and the pole axis (11), like the angle (a) between the lower sliding surface (15) and the pole axis (11), being greater than the static friction angle of approximately 15° that is produced between the wire (9) and the hook (4) when tractive force is directed outwards.

2. Pole according to claim 1, **characterised in that** the hook (4) comprises an elongate tongue (5, 6), which extends parallel to the pole axis (11), is capable of bending in the hook projection (17), and merges with a thickened nose (12, 13) toward the wire insertion opening (10).

3. Pole according to claim 2, **characterised in that** the nose (12) has a rounded outer edge (16).

4. Pole according to claim 2 or claim 3, **characterised in that** the thickened nose (13) is configured in the shape of a reverse hook.

5. Pole according to any one of claims 2 to 4, **characterised in that** the thickened nose (13) has a double wedge shape (18).

6. Pole according to any one of claims 1 to 5, **characterised in that** hooks (3) that are upright or inclined by no more than 60° are also provided on lateral U- or V-shaped formations (20) on the legs (2) of the pole (1).

7. Pole according to claim 6, **characterised in that** the inclined hooks (3) on the formation (20) comprise an asymmetrical arrangement of sliding surfaces (15, 15', 21, 21') in order to form a chicane.

8. Pole according to claim 7, **characterised in that** the mouth opening (10) of the chicane (23) is configured as a further hook (24).

9. Pole according to claim 8, **characterised in that** the mouth opening (10) is configured as an individual hook (24) comprising an elongate short tongue, which extends parallel to the pole axis (11), is not capable of bending in the hook projection (17), and comprises a thickened nose, in the shape of a double wedge (18) or a reverse hook (13), for example, toward the wire insertion opening (10).

10. Pole according to any one of claims 7 to 9, **characterised in that**, in order to fix the wire (9), the opening of the chicane (23) and the lower hook eye, in upright hooks, is moved inwardly from the centre of the lower hook eye toward the pole centre, by means of the long sliding surfaces (15, 15', 21, 21') of the mouth opening (10).

11. Pole according to any one of claims 1 to 10, **characterised in that** two hooks having different configurations and functions are provided as a double hook, close together and on top of each other.

12. Pole according to any one of claims 6 to 11, **characterised in that** the U- or V-shaped formation (20, 20') of the lateral legs (2) is placed toward the pole back (27), the punched recess (35) being incorporated into the pole back (27).

13. Pole according to claim 12, **characterised in that** a chicane (23) is incorporated into the pole back (27).

14. Pole according to any one of claims 1 to 13, **characterised in that** the base (34) of the portion that is punched out for the hook opening (33) terminates at a distance from the lateral legs (2) of the profile.

15. Pole according to any one of claims 1 to 14, **characterised in that** the legs (2) of the profile are bent outwards toward the pole axis (11) at an angle (g).

16. Pole according to any one of claims 1 to 15, **characterised in that** the double hooks (4) are located in the lower region of the pole (1).

## Revendications

1. Poteau (1) en tôle d'acier pour palissade en fil dans la viticulture ou la culture fruitière, présentant un profilé de base en particulier sous forme d'un U, V, S, Z, carré, tube rond, forme de losange, forme de losange ouvert, ovale, ou ovale ouvert, et au moins deux crochets doubles (4) intérieurs disposés sur les ailes (2) du profilé de base, qui sont réalisés par matriçage de languettes (5, 6, 7) dans la tôle d'acier, chaque crochet double présentant un ouverture (10) d'insertion de fil et un espace libre (8) pour un fil de tension (9) ainsi qu'une arête d'appui (15, 21) oblique inférieure et supérieure, orientée vers le côté extérieur du poteau (1), ainsi qu'une large ouverture (10) d'insertion,
**caractérisé en ce que**
les arêtes d'appui inférieure et supérieure (15, 21) sont configurées comme grandes surfaces de glissement (15, 21) intégrées dans les crochets (4), l'arête d'appui inférieure (15) s'étendant, à partir d'une base (14) de l'espace libre (8), essentiellement en ligne droite vers l'ouverture (10) d'insertion de fil et l'angle (a') entre la surface de glissement supérieure (21) et l'axe de poteau (11) ainsi que l'angle (a) entre la surface de glissement inférieure (15) et l'axe de poteau (11) étant plus grands que l'angle de friction par adhérence d'environ 15° se formant entre le fil (9) et le crochet (4), dans le cas d'une direction de force de traction vers l'extérieur.

2. Poteau selon la revendication 1, **caractérisé en ce que** le crochet (4) présente une languette (5, 6) oblongue, s'étendant parallèlement à l'axe de poteau (11), flexible dans une embase de crochet (17), qui se raccorde à un nez renflé (12, 13) vers l'ouverture (10) d'insertion de fil.

3. Poteau selon la revendication 2, **caractérisé en ce que** le nez (12) présente une arête extérieure (16) arrondie.

4. Poteau selon l'une des revendications 2 ou 3, **caractérisé en ce que** le nez renflé (13) est réalisé sous forme d'un crochet en dépouille.

5. Poteau selon l'une des revendications 2 à 4, **caractérisé en ce que** le nez renflé (13) présente une forme de coin double (18).

6. Poteau selon l'une des revendications 1 à 5, **caractérisé en ce que** des crochets (3) supplémentaires verticaux ou inclinés à 60° au maximum sont prévus sur des saillants (20) latéraux en forme de U ou de V des ailes (2) du poteau (1).

7. Poteau selon la revendication 6, **caractérisé en ce que** les crochets (3) inclinés présentent sur le saillant (20) un agencement asymétrique de surfaces de glissement (15, 15', 21, 21') pour former une chicane.

8. Poteau selon la revendication 7, **caractérisé en ce que** l'ouverture d'entrée (10) de la chicane (23) est réalisée comme crochet (24) supplémentaire.

9. Poteau selon la revendication 8, **caractérisé en ce que** l'ouverture d'entrée (10) est réalisée comme crochet individuel (24), avec une courte languette oblongue s'étendant parallèlement à l'axe de poteau (11), qui n'est pas flexible dans l'embase de crochet (17) et qui présente en direction de l'ouverture (10) d'insertion de fil un nez renflé, à peu près sous forme d'un coin double (18) ou d'un crochet en dépouille (13).

10. Poteau selon l'une des revendications 7 à 9, **caractérisé en ce que** pour la fixation du fil (9) le débouché de la chicane (23) dans l'oeillet de crochet inférieur est déplacé du milieu de l'oeillet de crochet inférieur vers l'intérieur en direction du milieu du poteau, lorsque le crochet est vertical, au moyen des longues surfaces de glissement (15, 15', 21, 21') de l'ouverture d'entrée (10).

11. Poteau selon l'une des revendications 1 à 10, **caractérisé en ce que** deux crochets de configuration et de fonction différentes sont prévus à faible distance et superposés l'un à l'autre comme crochet double.

12. Poteau selon l'une des revendications 6 à 11, **caractérisé en ce que** le saillant (20, 20') en forme de U ou de V des ailes latérales (2) est déplacé vers le dos de poteau (27), la découpe matricée (35) étant ménagée dans le dos de poteau (27).

13. Poteau selon la revendication 12, **caractérisé en ce qu'**une chicane (23) est intégrée dans le dos de poteau (27).

14. Poteau selon l'une des revendications 1 à 13, **caractérisé en ce que**, par son fond (34), le matriçage formant l'ouverture de crochet (33) se termine à distance des ailes latérales (2) du profilé.

15. Poteau selon l'une des revendications 1 à 14, **caractérisé en ce que** les ailes (2) du profilé sont coudées vers l'extérieur d'un angle (g) par rapport à l'axe de poteau (11).

16. Poteau selon l'une des revendications 1 à 15, **caractérisé en ce que** les crochets doubles (4) se situent dans la zone inférieure du poteau (1).
